# EUROPÄISCHE PATENTSCHRIFT

(11) **EP 0 556 757 B1**
(45) Veröffentlichungstag und Bekanntmachung des Hinweises auf die Patenterteilung: **13.12.1995**
(21) Anmeldenummer: 93102295.8
(22) Anmeldetag: 13.02.1993
(51) Int. Cl.: C09D 5/34, C09D 7/14

(54) **Verfahren zur Herstellung von Spachtelmassen und Verwendung der erhaltenen Spachtelmassen**
Process for producing filling pastes and use of obtained filling pastes
Procédé pour la production des mastics et utilisation des mastics obtenus

(30) Priorität: 15.02.1992 DE 4204610
(43) Veröffentlichungstag der Anmeldung: 25.08.1993
(73) Patentinhaber: Herberts Gesellschaft mit beschränkter Haftung, 42285 Wuppertal (DE)
(72) Erfinder: Nawotka, Otfried, W-5600 Wuppertal 1 (DE)
(74) Vertreter: Türk, Gille, Hrabal, Leifert

(56) Entgegenhaltungen:
- EP-A- 0 138 051
- GB-A- 740 776
- US-A- 3 991 025
- US-A- 4 229 329

## Beschreibung

Die Erfindung betrifft die Herstellung von Spachtelmassen, insbesondere von für die Industrielackierung und Kraftfahrzeuglackierung und die Reparaturlackierung von Kraftfahrzeugen und Industrie-Gegenständen verwendbaren Spachtelmassen.

Spachtelmassen werden in der Praxis durch Dispergieren von Pigmenten und Füllstoffen in lösemittelhaltigen, physikalisch, oxidativ trocknenden oder chemisch-härtenden Bindemitteln hergestellt. Da solche Spachtelmassen sehr hohe Viskositäten in der Größenordnung von 15 000 mPas bis über 100 000 mPas aufweisen, ist es bisher notwendig gewesen, zu ihrer Herstellung spezielle Dispergieraggregate, nämlich sogenannte Dreiwalzen (Dreiwalzenstühle) einzusetzen (siehe Dr. Hans Kittel, Lehrbuch der Lacke und Beschichtungen, Verlag W.A. Colomb in der Heeneman GmbH, 1976, Band IV, Seite 64).

Durch diese Dispergierungsverfahren gelangen jedoch große Mengen an Lösemitteldämpfen in die Luft und belasten somit die Umwelt. Die Dispergierung mit modernen Sandmühlen oder Perlmühlen, welche durch ihr geschlossenes System keine oder nur sehr geringe Mengen Lösemittel in die Umwelt entweichen lassen, konnte bisher wegen der hohen Viskosität der Spachtelmassen nicht durchgeführt werden. Die Verdünnung der Spachtelmassen auf niedrigere Viskosität zwecks Dispergierung mittels Perlmühlen oder Sandmühlen und anschließende Verdampfung der Lösungsmittel ist schwierig, unwirtschaftlich und ebenfalls umweltbelastend, weil die Entsorgung der abgedampften Lösemittel mit Energieaufwand und Entstehung von flüssigen oder gasförmigen Schadstoffen verbunden ist.

Eine Dispergierung der Pigmente und Füllstoffe nur mit Hilfe von sogenannten Dissolvern führt zu Produkten, deren Qualität weit unterhalb der Anforderungen liegt, welche an Spachtelmassen gestellt werden, die insbesondere für die Autoreparatur geeignet sein sollen.

Aufgabe der Erfindung war daher die Bereitstellung eines Verfahrens zur Herstellung von Spachtelmassen, das umweltfreundlich durchgeführt werden kann und zu Spachtelmassen führt, die bei verbesserter Qualitätskonstanz sauber (homogen), fein und gut ziehfähig sind, bei der Verwendung eine gute Oberflächenbeschaffenheit ergeben.

Es hat sich gezeigt, daß diese Aufgabe gelöst werden kann, wenn ein Teil der Spachtelmasse, der bis zu 100 Gew.% der benötigten Lösemittel und bis zu 100 Gew.% der benötigten Bindemittel enthalten kann, jedoch nur einen Teil der in der Spachtelmasse zu verwendenden Pigmente und/oder Füllstoffe enthält, in einer schnellaufenden Rührwerksmühle, insbesondere einer Perl- oder Sandmühle (bead mill, sand mill) dispergiert bzw. vermahlen wird, worauf die erhaltene Masse mit den restlichen Pigment- und/oder Füllstoffanteilen, sowie gegebenenfalls restlichen Bindemittelanteilen und gegebenenfalls restlichen Lösemittelanteilen versetzt und weiter dispergiert wird, wobei dieses weitere Dispergieren bevorzugt in einem schnellaufenden Rührscheibenaggregat, einem sogenannten Dissolver, erfolgt.

Gegenstand der Erfindung ist daher ein Verfahren zur Herstellung von Spachtelmassen durch Vermischen von Bindemittel, Lösemittel, Pigmenten und Füllstoffen, sowie gegebenenfalls Additiven, das darin besteht, daß man in einer ersten Stufe bevorzugt mindestens 90 Gew.% der Lösemittel, bevorzugt 80 bis 100 Gew.% der Bindemittel mit einem derartigen Anteil an Pigmenten und/oder Füllstoffen sowie gegebenenfalls üblichen Additiven in einer schnellaufenden Rührwerksmühle, insbesondere einer Perl- oder Sandmühle dispergiert bzw. vermahlt, daß die Dispergierbarkeit in der Rührwerksmühle gegeben ist, und daß man in einer zweiten Verfahrensstufe, die in der Rührwerksmühle erhaltene Masse mit den restlichen Pigment- und/oder Füllstoffanteilen sowie gegebenenfalls den restlichen Lösemittel- und Bindemittelanteilen versetzt und mit einem schnellaufenden Rührscheibenaggregat, einem sogenannten Dissolver, eine Eindispergierung durchführt.

Bevorzugt werden in der ersten Stufe im wesentlichen die färbenden Pigmente, zusammen mit gegebenenfalls Anteilen der nichtfärbenden Pigmente und Füllstoffe, eingearbeitet.

Gemäß eine weiteren bevorzugten Ausführungsform, werden in der ersten Verfahrensstufe im wesentlichen die Pigmente und/oder Füllstoffe mit feinem Primärkorn, z. B. in der Größenordnung von unter 0,1 bis 5 »m, dispergiert.

Gemäß einer bevorzugten Ausführungsform des erfindungsgemäßen Verfahrens wird in der ersten Verfahrensstufe unter derartigen Bedingungen (wie z.B. die Wahl der eingesetzten Komponenten, deren Mengen und/oder die Rührbedingungen) gearbeitet, daß das in der ersten Stufe erhaltene Produkt eine Viskosität von 11 000 bis 16 000 mPa.s aufweist. In der zweiten Stufe wird dann unter solchen Bedingungen (wie z.B. Wahl der eingesetzten Komponenten, deren Mengen und/oder die Rührbedingungen) gearbeitet, daß eine endgültige Spachtelmasse mit einer Viskosität von 50 000 bis 150 000 mPa.s, bevorzugt 60 000 bis 100 000 mPa.s erhalten wird. Bei den Viskositäten handelt es sich jeweils um scheinbare Viskositäten, gemessen im Rotationsviskosimeter, bei einem Schergefälle von 15 sec⁻¹ bei 20°C.

Die erfindungsgemäß eingesetzten schnellaufenden Rührwerksmühlen sind insbesondere Perlmühlen und Sandmühlen (bead mill und sand mill) und werden beispielsweise in SURFACE COATING, VOL 2-PAINTS AND THEIR APPLICATIONS; TAFE EDUCATION BOOKS; RANDWICK AUSTRALIA 2031, 1984. Seite 442, und in EP-A1-0 369 149 beschrieben. Der Perlendurchmesser von Perlmühlen liegt z. B. bei 1 - 3 mm.

Bei den Sandmühlen oder Perlmühlen handelt es sich um geschlossene Systeme, die keine oder nur sehr geringe Mengen Lösemittel in die Umwelt entweichen lassen.

Unter Dissolver werden schnellaufende Rührscheibenaggregate verstanden, deren Rührscheiben z.B. Grobzahnscheiben oder Feinzahnscheiben sind. Die Feinzahnscheiben eignen sich besser für Mahlgüter mit Viskositätswerten von 10 000 mPas bis 50 000 mPas, die Grobzahnscheiben für Mahlgüter mit Viskositätswerten über 50 000 mPas bis beispielsweise 100 000 mPas und mehr. Selbstverständlich sind auch Doppelwellendissolver geeignet, die mehrere Wellen aufweisen, an denen Rührscheiben befestig sind, sowie Vakuumdissolver mit und ohne Vakuum.

Dissolver sind allgemein bekannt als Dispergieraggregate zur Herstellung von Beschichtungsmassen mit niedrigen Ansprüchen oder zur Vordispergierung von Mahlgütern für Beschichtungsmassen mit höheren Ansprüchen, die anschließend mittels besserer Dispergieraggregate, wie z.B. Dreiwalze, Perlmühle oder Sandmühle dispergiert werden.

Gemäß einer bevorzugten Ausführungsform der Erfindung, können die in der schnellaufenden Rührwerksmühle, z. B. in der Perl- oder Sandmühle zu dispergierenden Massen vor dem Einbringen in die Rührwerksmühle in einem Dissolver angeteigt bzw. vordispergiert werden.

Zur Herstellung von Spachtelmassen werden Pigmentteilchen und/oder Füllstoffteilchen in Bindemitteln unter Erzielung hoher Viskositäten dispergiert. Dispergieren heißt in der Fertigung von Lackfarben, Grundierungen und Spachtelmassen, die durch Oberflächenkräfte zusammengehaltenen Pigmentteilchen mit Hilfe von Scherkräften möglichst in die einzelnen Pigmentteilchen zu zerlegen, also auch zu Vermahlen und gleichzeitig zu benetzen.

Unter Pigmenten werden organische oder anorganische, bunte oder unbunte Farbmittel verstanden, die in Lösemitteln oder Bindemittel praktisch unlöslich sind. Nach dieser Definition gelten auch solche Farbmittel, die in Filmbildnern mit gleichem oder annähernd gleichen Brechungsindex, das heißt in lösemittelverdünnbaren Spachtelmassen nicht farbgebend sind, als Pigmente, wie z.B. Aluminiumsilikat, Kaolin, (Schiefermehl), Magnesiumsilikat (Talkum), und Siliciumdioxid, z.B. feindisperses Siliciumdioxid, sowie Bentonite und Hectorite. Die nicht farbgebenden Pigmente werden im allgemeinen Sprachgebrauch auch als Füllstoffe (extender pigments) bezeichnet.

Beispiele für erfindungsgemäß einsetzbare farbgebende Pigmente sind anorganische Pigmente, wie Titandioxid, Eisenoxidrot, Eisenoxidgelb, Eisencyanblau und Zinksulfid, sowie organische Pigmente, wie z.B. Phthalocyaninblau, Phthalocyaningrün oder Azopigmente, aber auch Ruß.

Die Teilchengrößen der färbenden Pigmente und der Füllstoffe (nichtfärbende Pigmente) kann in weiten Bereichen variieren, sie liegt z.B. bei unter 0,1 bis 100 »m. Im Folgenden sind Beispiele für die Teilchengrößen für färbende Pigmente, wie sie bevorzugt in der Perlmühle eingesetzt werden, und für Füllstoffe, wie sie bevorzugt im Dissolver zugesetzt werden, angegeben:

| **Färbende Pigmente** (unter 0,1 bis etwa 0,3»m) | |
|---|---|
| | durchschnittlich |
| Eisenoxidrot-Typen | 0,2 bis 1 »m |
| Titandioxid RKB | 0,2 »m |
| Zinksulfid | 0,3 »m |
| Ruß | unter 0,1 »m |

| **Füllstoffe** (etwas 0,8 bis zu 100 »m) | | | |
|---|---|---|---|
| | | durchschnittlich | maximal |
| 1a) | Bariumsulfat | 0,8 bis 10 »m | |
| 1b) | Talkum-Typen | 6 bis 25 »m | 50 bis 100 »m |
| 1c) | Schiefermehl | 12 »m | 60 »m |
| | Calcit | 6,5 »m | 40 »m |

Erfindungsgemäß konnte das Problem der umweltfreundlichen Fertigung von Spachtelmassen, insbesondere für die Autoreparaturlackierung, überraschenderweise dadurch gelöst werden, daß beispielsweise zuerst nur die für den Spachtel farbgebenden Pigmente und gegebenenfalls auch weitere Pigmente, z.B. Calciumcarbonat-Pigmente vom Calcit-Typ, mit Hilfe der Sandmühle oder bevorzugt der Perlmühle, gegebenenfalls nach Vordispergierung mittels Dissolver, angerieben und anschließend die für den Spachtel nicht farbgebenden Pigmente aus der Gruppe von beispielsweise Aluminiumsilikat (Kaolin, Schiefermehl), Magnesiumsilikat (Talkum) und Siliciumdioxid mittels Dissolver eingerührt wurden.

Feindisperses Siliciumdioxid kann z.B. nach der Dispergierung der übrigen Pigmente mittels der Rührwerksmühle mit Hilfe des Dissolvers eingerührt werden. Wegen der geringen Teilchengröße, ist eine Vermahlung oder Dispergierung mittels Rührwerksmühle oft nicht notwendig. Es kann jedoch auch bei der ersten Dispergierung mitvermahlen werden. Das gilt auch für Bentonite und Hectorite.

Die farbgebenden Pigmente können mit den gesamten Bindemitteln und Lösemitteln zusammen dispergiert werden. Es kann manchmal von Vorteil sein, einen Teil Lösemittel und/oder Bindemittel erst nach der Dispergierung mittels Perlmühle oder Sandmühle und gegebenenfalls nach der Dispergierung mittels Dissolver zuzumischen. Kleine Mengen an Lösemittel, die zum Schluß zugegeben werden, können z.B. zur Einstellung der Endviskosität dienen oder zur Reinigung der Gefäße verwendet werden. Bindemittel, welche die Viskosität stark erhöhen, können z.B. erst nach der Perlmühlen-Dispergierung zugegeben werden.

Für das erfindungsgemäße Verfahren können alle für Spachtelmassen üblichen organischen Bindmittel, wie selbsttrocknende Bindemittel, z.B. lufttrocknende Bindemittel, wie sogenannte Nitrobindemittel, sowie auch chemisch selbst- und fremdvernetzende Bindemittel, wie z.B. Polyester, verwendet werden.

Als Lösemittel sind die für Spachtelmassen üblichen Lösemittel geeignet, wie aromatische Lösemittel, z.B. Xylol, oder aliphatische Lösemittel, wie Alkohole, z.B. n-Butanol und Ester, z.B. Ethylacetat. Es können als Lösemittel auch reaktive flüssige Bestandteile, z.B. Styrol, als Reaktivverdünner verwendet werden.

Übliche Additive für Spachtelmassen können zugesetzt werden, wie z.B. Katalysatoren (z.B. Kobaltoctoat).

Die erfindungsgemäß hergestellten Spachtelmassen entsprechen den allgemeinen Prüfkriterien. Durch das erfindungsgemäße Verfahren ergeben sich neben dem Vorteil der stark verringerten Lösungsmittelemission eine Qualitätsverbesserung der auf diese Weise produzierten Spachtelmassen, eine Verkürzung der Produktionszeit und eine Reduzierung des Materialverlusts. Die gegenüber der Dreiwalzenherstellung erreichbare Qualitätsverbesserung umfaßt unter anderem eine bessere Reproduzierbarkeit der hergestellten Spachtelmassen, keine oder geringe Nachkorrekturen, die sonst wegen der verdunsteten Lösemittel notwendig sind, und die Herstellung von Spachtelmassen mit besserer Ziehfähigkeit, besserer Feinheit und besserer Oberfläche und Qualitätskonstanz.

Die erfindungsgemäß hergestellten Spachtelmassen sind durch ihre guten Oberflächencharakteristika besonders gut überlackierbar und beispielsweise zur Herstellung von Mehrschichtlackierungen geeignet. Sie können bevorzugt bei der Reparaturlackierung von Kraftfahrzeugen, insbesondere von Automobilkarossen oder deren Teilen, sowie bei der Industrielackierung verschiedenster Geräte verwendet werden.

Die folgenden Beispiele erläutern die Erfindung. Alle Prozentangaben sind Massenprozente, wenn nicht anders bezeichnet.

### Beispiel 1

128 g einer 45%igen Lösung eines styrolmodifizierten Alkydharzes (30% Styrol, 33% trocknendes Öl) in Xylol werden vorgelegt und unter Rühren werden 1 g Methylisobutylketoxim, 2 g 2-Ethoxyethanol, 9 g Xylol, 2 g Butanol-(1), 10 g Eisenoxidrot (Ölzahl 26 nach DIN 53 199) sowie 226 g einer Mischung aus 3% Zinksulfid und 70% Bariumsulfat (Ölzahl 8 nach DIN) zugemischt, wobei die Temperatur der Mischung nicht über 45°C steigen darf. Die gut verrührte Mischung wird bei etwa 45°C bei einer Verweilzeit von 10 bis 45 Minuten in einer Perlmühle dispergiert. Anschließend werden 66 g Talkum (Ölzahl 30 nach DIN) und 56 g Schiefermehl (Ölzahl 26 nach DIN) mit Hilfe eines schnellaufenden Dissolvers zugemischt und 10 bis 20 Minuten mit 16 - 25 m/sec Scheibenumfangsgeschwindigkeit bei etwas 45°C dispergiert.

### Vergleichsversuch A

Die gleichen Rohstoffe und Mengen wie in Beispiel 1 werden zusammengemischt und über eine Dreiwalze in 3 Mahlgängen vermahlen.

Die nach Beispiel 1 und Vergleichsversuch A hergestellten Spachtelmassen werden auf einem Stahlblech aufgezogen. Die Spachtelmasse von Beispiel 1 ist in folgenden Eigenschaften besser als die Spachtelmasse des Vergleichsversuchs A: Sauberkeit, Feinheit, Oberflächenbeschaffenheit und Ziehfähigkeit.

### Beispiel 2

161 g einer 65%igen Lösung eines ungesättigten Polyesterharzes in Styrol werden vorgelegt und unter Rühren werden 26 g Styrol, 4g Ethanol, 6 g feindisperses Siliciumdioxid, 7 g Eisenoxidrot (Ölzahl 30 nach DIN), 8 g Titandioxid (Ölzahl 19 nach DIN) sowie 112 g Calcit (Ölzahl 16 nach DIN) zugemischt, wobei die Temperatur des Mahlgutes nicht über 45°C steigen darf. Die gut verrührte Mischung wird bei etwa 45°C in einer Perlmühle mit einer Verweilzeit von 10 bis 45 Minuten dispergiert. Anschließend werden 68 g mikronisiertes Magnesiumsilikat (Ölzahl 30 nach DIN) mit Hilfe eines schnellaufenden Dissolvers zugemischt und 10 bis 20 Minuten bei 16 bis 25 m/sec Rührscheibenumfangsgeschwindigkeit bis etwa 45°C dispergiert. Dann werden 2 g Kobaltoctoat, 33%ig in Ethylacetat, eingerührt.

### Vergleichsversuch B

Die gleichen Rohstoffe wie in Beispiel 2 werden in gleichen Anteilen über eine Dreiwalze in zwei Mahlgängen vermahlen.

Nach Zumischen von 2% phlegmatisiertem, organischem Peroxid werden die nach Beispiel 2 und Vergleichsversuch A hergestellten Spachtelmassen wie vorstehend beschrieben geprüft. Als Verbesserungen der nach dem erfindungsgemäßen Verfahren hergestellten Spachtelmassen werden festgestellt: Größere Sauberkeit und bessere Oberflächenbeschaffenheit und Haftung.

## Patentansprüche

1. Verfahren zur Herstellung von Spachtelmassen durch Vermischen von einem oder mehreren Bindemitteln, einem oder mehreren Lösemitteln, einem oder mehreren Pigmenten und/oder Füllstoffen, sowie gegebenenfalls einem oder mehreren üblichen Additiven, dadurch gekennzeichnet, daß man in einer ersten Stufe mindestens 90 Gew.-% der benötigten Lösemittel und 80 bis 100 Gew.% der benötigten Bindemittel mit einem derartigen Anteil der benötigten Pigmente und/oder Füllstoffe, daß die Dispergierbarkeit in einer schnellaufenden Rührwerksmühle gegeben ist, sowie gegebenenfalls mit den Additiven, in einer schnellaufenden Rührwerksmühle dispergiert, und daß man die erhaltene dispergierte Masse in einer zweiten Stufe mit den restlichen Pigment- und/oder Füllstoffanteilen und gegebenenfalls restlichen Bindemittel-, Lösemittel- und/oder Additivanteilen versetzt und in einem Dissolver auf die gewünschte Feinheit dispergiert.

2. Verfahren nach Anspruch 1, dadurch gekennzeichnet, daß in der ersten Stufe im wesentlichen alle färbenden Pigmente zusammen mit gegebenenfalls Anteilen der nicht-färbenden Pigmente und Füllstoffe eingearbeitet werden.

3. Verfahren nach Anspruch 1, dadurch gekennzeichnet, daß in der ersten Verfahrensstufe im wesentlichen alle färbenden Pigmente und/oder Füllstoffe mit einem Primärkorn bis zu 5 »m eingearbeitet werden.

4. Verfahren nach einem der vorhergehenden Ansprüche, dadurch gekennzeichnet, daß als schnellaufende Rührwerksmühle eine Perl- oder Sandmühle, insbesondere eine geschlossene Perl- oder Sandmühle verwendet wird.

5. Verfahren nach einem der vorhergehenden Ansprüche, dadurch gekennzeichnet, daß eine Vordispergierung der in der geschlossenen Rührwerksmühle zu dispergierenden Masse mit einem Dissolver durchgeführt wird.

6. Verfahren nach einem der Ansprüche 1 bis 5, dadurch gekennzeichnet, daß man in der ersten Stufe unter derartigen Bedingungen arbeitet, daß ein Produkt mit einer Viskosität von 11 000 bis 16 000 mPa.s erhalten wird, und daß die zweite Stufe unter derartigen Bedingungen durchgeführt wird, daß eine Spachtelmasse mit einer Viskosität von 50 000 bis 150 000 mPa.s erhalten wird.

7. Verwendung der nach einem der Ansprüche 1 bis 6 erhaltenen Spachtelmassen bei der Mehrschichtlackierung von Gegenständen in der Industrie oder von Kraftfahrzeugen.

8. Verwendung der nach einem der Ansprüche 1 bis 6 erhaltenen Spachtelmassen bei der Industrie- und Kraftfahrzeug-Reparaturlackierung.

## Claims

1. A process for producing stopper compositions by mixing one or more binder vehicles, one or more solvents, one or more pigments and/or fillers, and optionally one or more customary additives, characterised in that in a first stage at least 90 % by weight of the requisite solvents and 80 to 100 % by weight of the requisite binder vehicles are dispersed with a proportion of the requisite pigments and/or fillers, and are optionally dispersed with the additives, in a high-speed agitator mill, in such a way that dispersibility is achieved in a high-speed agitator mill, and that in a second stage the dispersed composition obtained is mixed with the remaining proportions of pigments and/or fillers and optionally with the remaining proportions of binder vehicles, solvents and/or additives and is dispersed to the desired fineness in a dissolver.

2. A process according to claim 1, characterised in that in substantially all the colorific pigments are incorporated in the first stage, optionally together with proportions of the non-colorific pigments and fillers.

3. A process according to claim 1, characterised in that substantially all the colorific pigments and/or fillers with a primary particle size up to 5 »m are incorporated in the first process stage.

4. A process according to any one of the preceding claims, characterised in that a bead or sand mill, particularly a closed bead or sand mill, is used as the high-speed agitator mill.

5. A process according to any one of the preceding claims characterised in that pre-dispersion of the composition to be dispersed in the closed agitator mill is effected using a dissolver.

6. A process according to any one of claims 1 to 5, characterised in that the first stage is operated under conditions such that a product with a viscosity of 11,000 to 16,000 mPa.s is obtained, and that the second stage is operated under conditions such that a stopper composition with a viscosity of 50.000 to 150.000 mPa.s is obtained.

7. The use of the stopper compositions obtained according to any one of claims 1 to 6 for the multilayer painting of articles in industry or of motor vehicles.

8. The use of the stopper compositions obtained according to any one of claims 1 to 6 in industrial and motor vehicle repair painting.

## Revendications

1. Procédé de préparation de mastics par mélange d'un ou plusieurs liants, un ou plusieurs solvants, un ou plusieurs pigments et/ou matières de charge et le cas échéant un ou plusieurs additifs usuels, caractérisé en ce que, dans un premier stade opératoire, on disperse dans un broyeur à agitation tournant rapidement au moins 90% en poids des solvants nécessaires et 80 à 100% en poids des liants nécessaires, avec une fraction des pigments et/ou matières de charge nécessaires telle que la dispersabilité au broyeur à agitation tournant rapidement soit assurée, et le cas échéant avec les additifs, et dans un deuxième stade opératoire, on ajoute à la masse dispersée ainsi obtenue le reste des pigments et/ou des matières de charge et le cas échéant, le reste des liants, solvants et/ou additifs, et on disperse au dissolveur jusqu'à la finesse voulue.

2. Procédé selon revendication 1, caractérisé en ce que, au premier stade opératoire, on incorpore essentiellement tous les pigments colorants avec le cas échéant une fraction des pigments non colorants et des matières de charge.

3. Procédé selon revendication 1, caractérisé en ce que, au premier stade opératoire, on incorpore essentiellement tous les pigments colorants et/ou matières de charge ayant une dimension de grain primaire allant jusqu'à 5 »m.

4. Procédé selon une des revendications qui précèdent, caractérisé en ce que l'on utilise en tant que broyeur à agitation tournant rapidement un broyeur à perles ou à sable, en particulier un broyeur à perles ou à sable hermétique.

5. Procédé selon une des revendications qui précèdent, caractérisé en ce que l'on procède à une dispersion préalable au dissolveur de la masse à disperser au broyeur à agitation hermétique.

6. Procédé selon une des revendications 1 à 5, caractérisé en ce que, au premier stade opératoire, on travaille dans des conditions telles que l'on obtienne un produit de viscosité 11 000 à 16 000 mPa.s et au deuxième stade opératoire, on travaille dans des conditions telles que l'on obtienne un mastic de viscosité 50 000 à 150 000 mPa.s.

7. Utilisation des mastics obtenus selon une des revendications 1 à 6 pour l'application de peintures à plusieurs couches sur des objets industriels ou sur des véhicules.

8. Utilisation des mastics obtenus selon une des revendications 1 à 6, pour la peinture d'articles industriels et de véhicules après réparation.
